# EUROPEAN PATENT SPECIFICATION

(11) **EP 2 511 701 B1**
(45) Date of publication and mention of the grant of the patent: **30.12.2020**
(21) Application number: 12163753.2
(22) Date of filing: 11.04.2012
(51) Int. Cl.: G01N 29/04, G01N 29/07, G01N 29/24, G01N 29/44

(54) **Transducer based structural health monitoring system**
Transducerbasiertes Überwachungssystem der strukurellen Integrität
Système de surveillance d'integrité structurelle a la base d'un transducteur

(30) Priority: 11.04.2011 US 201113083957
(43) Date of publication of application: 17.10.2012
(73) Proprietor: The Boeing Company, Chicago, IL 60606-1596 (US)
(72) Inventor: Sohn, Hoon, 150-0762 Seoul (KR); Yeum, Chul Min, 360-150 Chungcheongbukdo (KR); Ihn, Jeong-Beom, Bellevue, WA 98004 (US)
(74) Representative: Howson, Richard Giles Bentham

(56) References cited:
- US-A1- 2007 012 111
- US-A1- 2010 264 778
- NING HU ET AL: "Damage identification of metallic structures using A0 mode of lamb waves", SHM. STRUCTURAL HEALTH MONITORING, SAGE PUBLICATIONS, XX, vol. 7, no. 3, 1 September 2008 (2008-09-01), pages 271-285, XP002592360, ISSN: 1475-9217, DOI: 10.1177/1475921708090566 [retrieved on 2008-07-21]

## Description

### Background:

The present disclosure relates generally to monitoring aircraft structures and, in particular, to monitoring aircraft structures for inconsistencies. Still more particularly, the present disclosure relates to a method and apparatus for detecting inconsistencies in aircraft structures using signals sent through the aircraft structures.

US 2007/012111 A1 describes an apparatus for monitoring structural health conditions of structures. The apparatus includes a piezoelectric device that has a bottom cover plate, piezoelectric rings concentrically disposed with respect to an axis and positioned on the bottom cover plate, and concentric filler rings made from an electrically insulating material. The piezoelectric device also includes electrical connection means for transmitting electrical signals that cause one or more of the piezoelectric rings to generate waves or transmit electrical signals developed by one or more of the piezoelectric rings in response to the waves.

US 2010/264778 A1 describes an acoustic transducer in which a set of electrode arrays is arranged around a nominal centre point and comprising a set of circumferentially disposed electrode elements. A piezoelectric material is located between a common electrode and said electrode elements.

Composite and metallic aircraft structures may be susceptible to internal changes that may occur from fatigue, impacts, and/or other events or conditions. Composite materials typically have a minimal visual indication of these types of changes. As a result, an aircraft may be inspected to access the integrity of the structure on a periodic basis, or after visual indications of surface inconsistencies, such as a dent or a scratch.

For example, impacts to a structure, such as an aircraft, may occur during cargo loading and unloading. Inspections of the structure of an aircraft may be time-consuming and costly in terms of the time and skill needed to perform the inspection. Further, an airline may incur a loss of revenue from the aircraft being out of service.

Structural health monitoring techniques have been developed and used to monitor materials and structures. These techniques often build the health monitoring systems into the structures. These health monitoring systems may be used to determine whether changes have occurred to these materials and structures over time.

Sudden changes in environments, such as electromagnetic effects, mechanical stresses, and other environmental effects may affect various materials and structures over time. By having health monitoring systems built into or associated with the structures to monitor the structures during use, appropriate measures and responses may be taken to prevent inconsistencies and may prolong the life span of these structures.

The monitoring of structures may include various non-destructive elevation methods, such as ultrasonic testing or x-ray testing. Ultrasonic testing uses contact-based transducers to mechanically scan a structure. These transducers may be surface-mounted on the structure or may be embedded in the structure to generate and propagate signals into the structure being monitored.

A structural health monitoring system uses transducers to transmit waveforms at various frequency ranges and acquire data from the responses. Although structural health monitoring systems may provide an automated onboard system for detecting and characterizing inconsistencies or changes that may require maintenance, these types of systems may require updates and adjustments when maintenance, modifications, and reconfigurations of an aircraft occur.

For example, if a skin panel is changed, if a landing gear is modified, or other changes occur, additional transducers may need to be moved or configured for use with the replaced or new components. These and other types of updates to the structural health monitoring system are time consuming and expensive. The time needed to update the health monitoring system may make the aircraft unavailable for use longer than desired.

Therefore, it would be advantageous to have a method and apparatus that takes into account some of the issues discussed above, as well as possibly other issues.

### SUMMARY

In one advantageous embodiment, a method for detecting an inconsistency in an object is provided. A signal sent from a first transducer unit is received at a second transducer unit. The signal is sent along a path through an object from the first transducer unit to the second transducer unit. The second transducer unit has a plurality of segments substantially aligned along the path of the signal. The first transducer unit has a different distance to each of the plurality of segments. A velocity is identified at each segment in the plurality of segments for a plurality of modes for the signal to form identified velocities. A determination is made as to whether the inconsistency is present along the path through the object using the identified velocities for the plurality of modes for the signal.

In another advantageous embodiment, an apparatus comprises a first transducer unit, a second transducer unit comprising a plurality of segments and a signal analysis module. The signal analysis module is configured to identify velocities for a plurality of modes for a signal sent from the first transducer unit and received at the plurality of segments for the second transducer unit. The signal is sent along a path through an object from the first transducer unit to the second transducer unit. The plurality of segments are substantially aligned along the path. The first transducer until has a different distance to each of the plurality of segments. The signal analysis module is configured to determine whether an inconsistency is present along the path through the object using the identified velocities for the number of modes for the signal.

In an example forming part of the disclosure and not according to the presently claimed invention, a health monitoring system of an aircraft comprises a transducer system and a signal analysis module. The transducer system is associated with a number of structures in the aircraft. The signal analysis module is configured to cause a first transducer unit in the transducer system to send a signal along a path in an object to a second transducer unit in the transducer system. The second transducer unit has segments. A velocity for each segment for a number of modes for the signal is identified to form identified velocities for the number of modes for the signal. The signal analysis module is configured to determine whether an inconsistency is present along the path through the object using the identified velocities for the number of modes for the signal.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is an illustration of an aircraft manufacturing and service method in accordance with an advantageous embodiment;
**Figure 2** is an illustration of an aircraft in which an advantageous embodiment may be implemented;
**Figure 3** is an illustration of a health monitoring environment in accordance with an advantageous embodiment;
**Figure 4** is an illustration of a transducer system in accordance with an advantageous embodiment;
**Figure 5** is an illustration of times at which a signal transmitted by a first transducer unit reaches a second transducer unit in accordance with an advantageous embodiment;
**Figure 6** is an illustration of a three-segment transducer unit in accordance with an advantageous embodiment;
**Figure 7** is another illustration of a three-segment transducer unit in accordance with an advantageous embodiment;
**Figure 8** is an illustration of a ring-based transducer unit in accordance with an advantageous embodiment;
**Figure 9** is an illustration of signals detected by two different segments of a transducer unit in accordance with an advantageous embodiment;
**Figure 10** is an illustration of a flowchart of a process for detecting an inconsistency in an object in accordance with an advantageous embodiment; and
**Figure 11** is an illustration of a data processing system in accordance with an advantageous embodiment.

### DETAILED DESCRIPTION

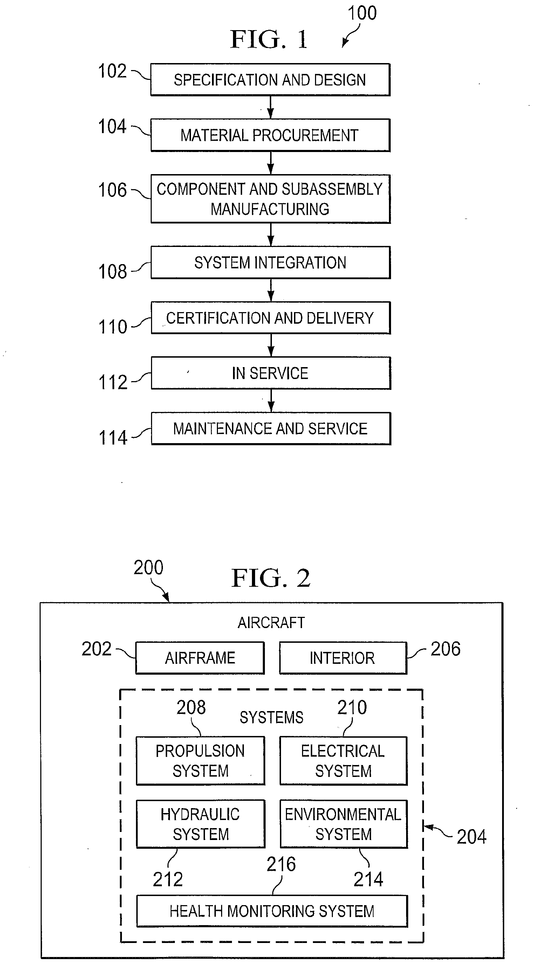

Referring more particularly to the drawings, advantageous embodiments of the disclosure may be described in the context of aircraft manufacturing and service method **100** as shown in **Figure 1** and aircraft **200** as shown in **Figure 2****.** Turning first to **Figure 1****,** an illustration of an aircraft manufacturing and service method is depicted in accordance with an advantageous embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112.** While in service **112** by a customer, aircraft **200** in **Figure 2** is scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 2****,** an illustration of an aircraft is depicted in which an advantageous embodiment may be implemented. In this example, aircraft **200** is produced by aircraft manufacturing and service method **100** in **Figure 1** and may include airframe **202** with a plurality of systems **204** and interior **206.** Examples of systems in plurality of systems **204** include one or more of propulsion system **208,** electrical system **210,** hydraulic system **212,** environmental system **214,** and health monitoring system **216.** Any number of other systems may be included. Although an aerospace example is shown, different advantageous embodiments may be applied to other industries, such as the automotive industry.

Apparatuses and methods embodied herein may be employed during at least one of the stages of aircraft manufacturing and service method **100** in **Figure 1****.** As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example may also include item A, item B, and item C or item B and item C.

In one illustrative example, components or subassemblies produced in component and subassembly manufacturing **106** in **Figure 1** for health monitoring system **216** may be fabricated or manufactured in a manner similar to components or subassemblies produced for health monitoring system **216** while aircraft **200** is in service **112** in **Figure 1****.** As yet another example, a number of apparatus embodiments, method embodiments, or a combination thereof may be utilized during production stages, such as component and subassembly manufacturing 106 and system integration **108** in **Figure 1****.** A number, when referring to items, means one or more items. For example, a number of apparatus embodiments is one or more apparatus embodiments. A number of apparatus embodiments, method embodiments, or a combination thereof may be utilized while aircraft **200** is in service **112** and/or during maintenance and service **114** in **Figure 1****.** The use of a number of the different advantageous embodiments may substantially expedite the assembly of and/or reduce the cost of aircraft **200.**

The different advantageous embodiments recognize and take into account a number of different considerations. For example, the different advantageous embodiments recognize and take into account that many currently used health monitoring systems that use baseline data may have a higher rate of false positive indications of inconsistencies than desired. These false indications may occur from different environmental and operational variations.

For example, the different advantageous embodiments recognize and take into account that many currently used health monitoring systems rely on baseline data. Baseline data is data generated from sending signals through structures in the aircraft during a time at which the structures are considered to have no inconsistencies.

The different advantageous embodiments recognize and take into account that this baseline data is typically generated under conditions that may vary from those present during operating conditions. For example, the data may be generated using the temperature, pressure, and other environmental factors that are present, while the aircraft or parts are on the ground or not installed. These parameters may change when the aircraft is operating. The parameters may also change between various phases of flight such as taxiing, takeoff, en route, landing, and other phases. Temperature, pressure, and other changes in the environment around an aircraft during operation of the aircraft may result in false indications of the presence of inconsistencies when compared to baseline data taken during generation of the baseline data when the aircraft is not in operation.

The different advantageous embodiments recognize and take into account that currently used health monitoring systems may attempt to compensate for changes in the environment. The different advantageous embodiments recognize and take into account that currently used systems may attempt to obtain data for the structures without inconsistencies under the different operating conditions that may occur to take into account changes that may occur in the environment. This information may then be used as a comparison to data generated during the operation of the aircraft to determine whether inconsistencies are present.

The different advantageous embodiments recognize and take into account, however, that this type of compensation for operating conditions may require recording more data than desired. The amount of data obtained for different environmental conditions may use more storage space than desirable in a health monitoring system. Further, the different advantageous embodiments also recognize and take into account that it may not be possible to record data from all possible types of operating conditions that may be encountered during the operation of the aircraft.

The different advantageous embodiments also recognize and take into account that this type of health monitoring system may also require re-recording of data when sensors are replaced. The different advantageous embodiments recognize and take into account that it would be desirable to detect inconsistencies without requiring the use of baseline data.

Thus, the different advantageous embodiments provide a method and apparatus for detecting an inconsistency in an object. A signal sent from a first transducer unit is received at a second transducer unit. The signal is sent on a path through an object from the first transducer unit to the second transducer unit. The second transducer unit has segments. A velocity is identified at each segment in the segments for a number of modes for the signal to form identified velocities. A determination is made as to whether the inconsistency is present along the path through the object using the identified velocities for the number of modes for the signal.

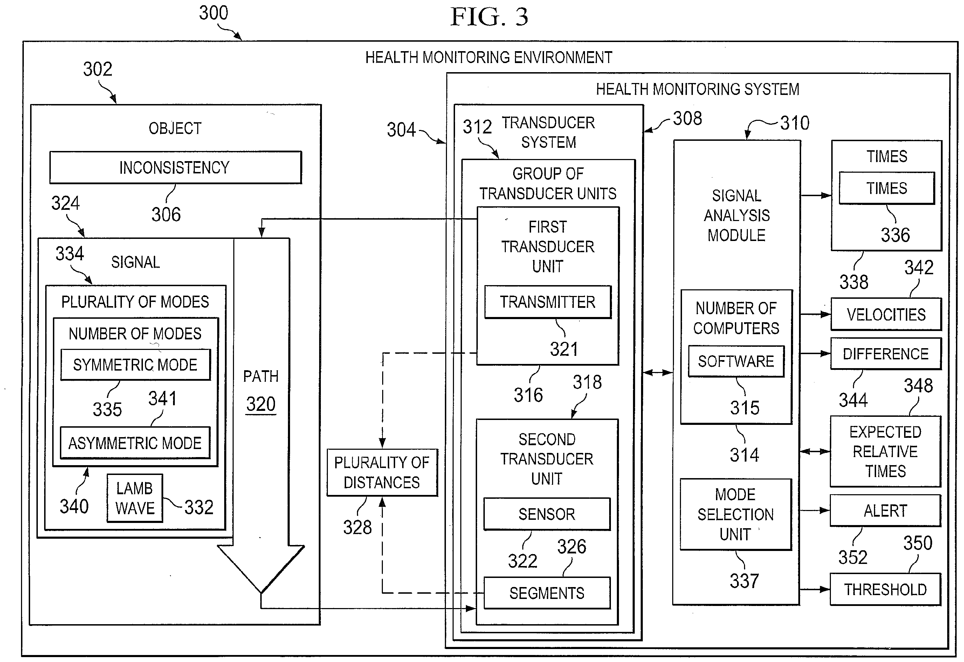

With reference now to **Figure 3****,** an illustration of a health monitoring environment is depicted in accordance with an advantageous embodiment. Health monitoring environment **300** is an example of an environment that may be implemented in aircraft **200** in **Figure 2****.** As depicted, health monitoring environment **300** includes object **302** and health monitoring system **304** in this illustrative example.

In this illustrative example, object **302** is an example of an object that may be monitored using health monitoring system **304.** In this illustrative example, object **302** may take various forms. In this example, object **302** takes the form of aircraft **200** or a structure or system within aircraft **200** in **Figure 2****.**

Health monitoring system **304** is associated with object **302.** A first component may be considered to be associated with a second component by being secured to the second component, bonded to the second component, fastened to the second component, and/or connected to the second component in some other suitable manner. The first component may also be connected to the second component using a third component. The first component may also be considered to be associated with the second component by being formed as part of and/or an extension of the second component.

In these depicted examples, health monitoring system **304** is configured to detect a presence of inconsistency **306** in object **302.** Inconsistency **306** may be any element or portion of object **302** that does not have a desired or expected state. Inconsistency **306** may be, for example, at least one of a delamination, a number of voids, and/or some other suitable type of inconsistency.

As depicted, health monitoring system **304** comprises transducer system **308** and signal analysis module **310.** Transducer system **308** comprises group of transducer units **312.** A transducer unit within group of transducer units **312** may function as a transmitter, a sensor, or both, depending on the particular implementation.

Transducers within group of transducer units **312** may be implemented using any known transducer configured to generate signals that may be sent through object **302.** Additionally, transducers within group of transducer units **312** may also include transducers configured to receive signal **324** sent through object **302.**

In these illustrative examples, group of transducer units **312** includes first transducer unit **316** and second transducer unit **318.** First transducer unit **316** may be configured to function as transmitter **321.** Second transducer unit **318** may be configured to function as sensor **322.**

Further, in these depicted examples, second transducer unit **318** has segments **326.** Segments **326** may be transducers in second transducer unit **318** in these examples. In other examples, segments **326** may be in a transducer in second transducer unit **318.**

First transducer unit **316** has plurality of distances **328** from first transducer unit **316** to segments **326** in second transducer unit **318.** In other words, each distance in plurality of distances **328** is from first transducer unit **316** to a particular segment in segments **326.**

In these illustrative examples, transducer system **308** is connected to signal analysis module **310.** Signal analysis module **310** is configured to control transducer system **308** in monitoring or testing of object **302** for inconsistency **306.**

In these illustrative examples, signal analysis module **310** is comprised of hardware, software, or a combination of the two. For example, signal analysis module **310** may be comprised of number of computers **314** with software **315.**

Signal analysis module **310** is configured to cause first transducer unit **316** to send signal **324** along path **320** through object **302** from first transducer unit **316** to second transducer unit **318.** Path **320** may also be referred to as a wave propagation path.

In this illustrative example, signal **324** takes the form of Lamb wave **332.** A Lamb wave is a wave that propagates in solid media. For example, a Lamb wave may propagate within the thickness of an object, such as a plate or other type of object.

Further, signal **324** has plurality of modes **334.** A mode, as used herein, is a component of a waveform that makes up a signal. A mode is one type of physical propagation of waveforms in these illustrative examples. Plurality of modes **334** includes symmetric mode **335** and asymmetric mode **341.** Asymmetric mode **341** may be affected more by certain types of inconsistencies in object **302** as compared to symmetric mode **335.** In particular, asymmetric mode **341** may be affected more by inconsistencies in the form of delaminations as compared to symmetric mode **335.**

As one illustrative example, object **302** may be a composite object comprising composite materials. With delamination of composite materials, asymmetric mode **341** is affected more than symmetric mode **335.** Of course, for other types of materials for other types of object **302,** other modes may be more affected by inconsistencies. For example, object **302** may comprise a material selected from at least one of a metal, titanium, aluminum, steel, and some other suitable material. Path **320** for signal **324** passes through the material in object **302.**

In these depicted examples, segments **326** for second transducer unit **318** are substantially aligned with path **320** for signal **324.** As signal **324** travels along path **320** to second transducer unit **318,** signal **324** reaches segments **326** at times **338.** Times **338** are identified by signal analysis module **310.** In these examples, times **338** may be referred to as times of flight or times of travel for signal **324.**

In these illustrative examples, different modes within plurality of modes **334** for signal **324** may arrive at different segments in segments **326** for second transducer unit **318** at different times within times **338.**

In these illustrative examples, signal analysis module **310** identifies times **336** within times **338** for number of modes **340** for signal **324.** Times **336** are the times at which number of modes **340** for signal **324** reaches segments **326** for second transducer unit **318.**

As depicted, signal analysis module **310** includes mode selection unit **337.** Mode selection unit **337** identifies number of modes **340** in plurality of modes **334** for which times **336** are identified. Number of modes **340** is selected for use in determining whether inconsistency **306** is present. Number of modes **340** is selected as ones that may provide a greatest desired ability to identify inconsistency **306** in object **302.**

In these illustrative examples, useful for understanding the disclosure and not according to the presently claimed invention, one mode is selected for number of modes **340.** In particular, number of modes **340** takes the form of asymmetric mode **341** in these examples. In other illustrative examples, additional modes may also be identified.

Signal analysis module **310** identifies times **336** for asymmetric mode **341** for signal **324** at which signal **324** is detected by segments **326** for second transducer unit **318.** In some illustrative examples, signal analysis module **310** identifies velocities **342** for asymmetric mode **341** for signal **324** at each of segments **326.** In other words, signal analysis module **310** identifies velocities **342** for asymmetric mode **341** for signal **324** when signal **324** reaches segments **326.**

In some illustrative examples, signal analysis module **310** identifies times **336** and velocities **342.** In other examples, signal analysis module **310** uses times **336** and plurality of distances **328** to identify velocities **342.** In still other examples, signal analysis module **310** uses plurality of distances **328** and velocities **342** to identify times **336.**

When inconsistency **306** is not present along path **320** in object **302,** velocities **342** for signal **324** at each of segments **326** may be substantially equal. However, when inconsistency **306** is present along path **320** in object **302,** velocities **342** may be different.

For example, when signal **324** is detected at segments **326** for second transducer unit **318,** signal analysis module **310** identifies the velocity for a mode in number of modes **340** for signal **324** at the time of detection at each of segments **326.** Further, signal analysis module **310** is configured to determine whether difference **344** between velocities **342** is greater than threshold **350.** Difference **344** may be greater than threshold **350** when inconsistency **306** is present along path **320** for signal **324.**

Signal analysis module **310** generates alert **352** if difference **344** between velocities **342** is greater than threshold **350.** Alert **352** is an indication that inconsistency **306** is present in object **302.** In these illustrative examples, alert **352** may be a signal, a message, or some other suitable type of alert. Alert **352** may include other information. For example, alert **352** may include the particular path, the transmitting and receiving transducer, the time at which the inconsistency was detected, operating conditions, state of the aircraft, and other suitable information.

In some illustrative examples, inconsistency **306** may be identified without using velocities **342.** For example, when inconsistency **306** is not present, signal **324** may be detected by segments **326** at expected relative times **348** based on known values for plurality of distances **328** and the assumption that signal **324** may reach each of segments **326** at substantially the same velocity when inconsistency **306** is not present.

A difference between times **336** identified for number of modes **340** for signal **324** and expected relative times **348** greater than a selected threshold indicates the presence of inconsistency **306** along path **320.**

In still other illustrative examples, signal analysis module **310** may compare the inverses of velocities **342** to identify whether inconsistency **306** is present along path **320.**

Thus, the different advantageous embodiments in health monitoring environment **300** identify a presence of inconsistency **306** without needing or using baseline data.

The illustration of health monitoring environment **300** in **Figure 3** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, although object **302** has been described with respect to an aircraft, object **302** may take other forms. For example, object **302** may be selected from one of a mobile platform, a stationary platform, a land-based structure, an aquatic-based structure, a space-based structure, an aircraft, an airplane, a helicopter, a surface ship, a tank, a personnel carrier, a train, a spacecraft, a space station, a satellite, a submarine, an automobile, a power plant, a bridge, a dam, a manufacturing facility, a building, a composite structure for the aircraft, a skin panel, an engine, a fuselage, a wing, a rib, and a stringer.

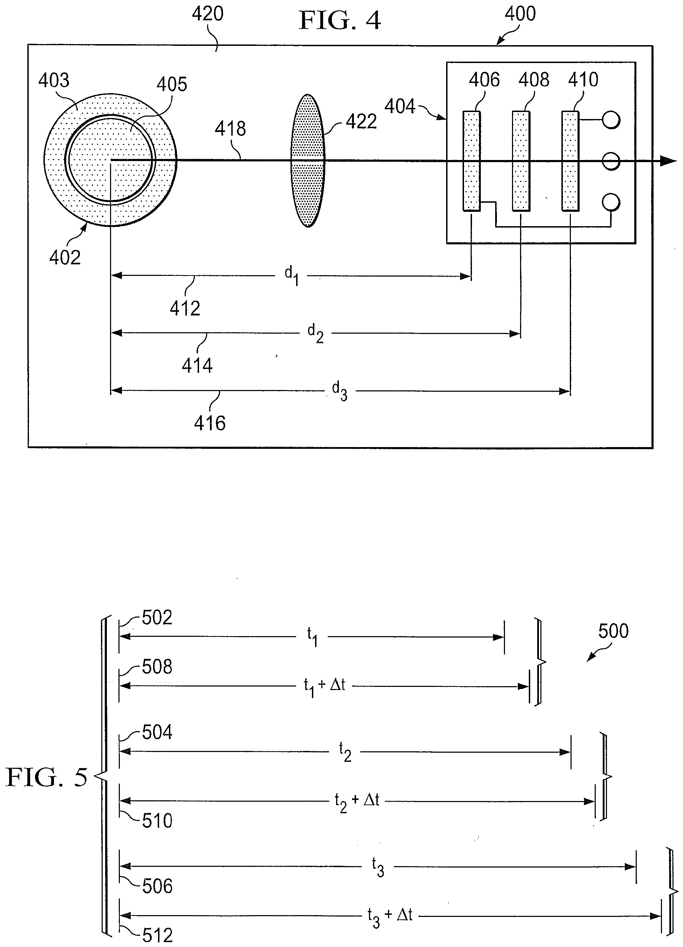

With reference now to **Figure 4****,** an illustration of a transducer system is depicted in accordance with an advantageous embodiment. In this illustrative example, transducer system **400** is an example of one implementation for transducer system **308** in **Figure 3****.**

As depicted, transducer system **400** includes first transducer unit **402** and second transducer unit **404.** First transducer unit **402** functions as a transmitter. Second transducer unit **404** functions as a sensor.

In this illustrative example, first transducer unit **402** has segment **403** and segment **405.** Second transducer unit **404** has segments **406, 408,** and **410.** All of these segments are transducers in this depicted example.

As illustrated, distance **412,** d₁, is the distance between the center of first transducer unit **402** and segment **406.** Distance **414,** d₂, is the distance between the center of first transducer unit **402** and segment **408.** Distance **416,** d₃, is the distance between the center of first transducer unit **402** and segment **410.**

First transducer unit **402** is configured to transmit a signal along path **418** through object **420.** Segments **406, 408,** and **410** are substantially aligned with path **418** in this example. A signal transmitted from first transducer unit **402** and traveling along path **418** reaches the segments for second transducer unit **404** in the order of segment **406,** segment **408,** and segment **410.**

When an inconsistency is not present along path **418** in object **420,** the signal is detected at segments **406, 408,** and **410** having substantially the same velocity. However, when an inconsistency is present along path **418** in object **420,** the velocities for the signal detected at the different segments may be different.

For example, when inconsistency **422** is present in object **420,** the time it takes for a signal transmitted by first transducer unit **402** to reach each of segments **406, 408,** and **410** of second transducer unit **404** may be delayed as compared to the time it takes for the signal to reach the segments when inconsistency **422** is not present. This delay may be substantially equal for the time it takes to reach segment **406,** the time it takes to reach segment **408,** and the time it takes to reach segment **410.**

With reference now to **Figure 5****,** an illustration of times at which a signal transmitted by a first transducer unit reaches a second transducer unit is depicted in accordance with an advantageous embodiment. In particular, times **500** are the times at which a signal transmitted by first transducer unit **402** reaches a segment of second transducer unit **404** when inconsistency **422** is present and when inconsistency **422** is not present in object **420** in **Figure 4****.** These times may also be referred to as times of flight.

In this illustrative example, time **502,** t₁, is the time it takes for the signal to reach segment **406** of second transducer unit **404** when inconsistency **422** is not present. Time **504,** t₂, is the time it takes for the signal to reach segment **408** of second transducer unit **404** when inconsistency **422** is not present. Further, time **506,** t₃, is the time it takes for the signal to reach segment **410** of second transducer unit **404** when inconsistency **422** is not present.

In other words, when inconsistency **422** is not present, the velocities of the signal detected at segments **406, 408,** and **410** are substantially equal as indicated by the following: $\frac{{d}_{1}}{{t}_{1}} = \frac{{d}_{2}}{{t}_{2}} = \frac{{d}_{3}}{{t}_{3}} , {V}_{1} = {V}_{2} = {V}_{3} .$ where V₁ is the velocity of the signal detected at segment **406,** V₂ is the velocity of the signal detected at segment **408,** and V₃ is the velocity of the signal detected at segment **410.**

When inconsistency **422** is present, times **502, 504,** and **506** may be delayed by substantially the same time delay, Δt. As depicted, when inconsistency **422** is present, the signal takes time **508** to reach segment **406,** time **510** to reach segment **408,** and time **512** to reach segment **410.** Time **508,** time **510,** and time **512** are longer time periods than time **502,** time **504,** and time **506,** respectively, by substantially the same amount, Δt.

In this manner, when inconsistency **422** is present, the velocities of the signal detected at segments **406, 408,** and **410** are different as indicated by the following: $\frac{{d}_{1}}{Δ t + {t}_{1}} \neq \frac{{d}_{2}}{Δ t + {t}_{2}} \neq \frac{{d}_{3}}{Δ t + {t}_{3}} , {V}_{1} \neq {V}_{2} \neq {V}_{3} .$

Identification of inconsistencies may be performed by comparing velocities. These velocities are identified from signals detected by transducers in which the signals are sent at substantially the same time through an object. The identification of the inconsistencies does not use prior baseline data. This process may be performed to identify inconsistencies even under changing operational and environmental conditions of the object.

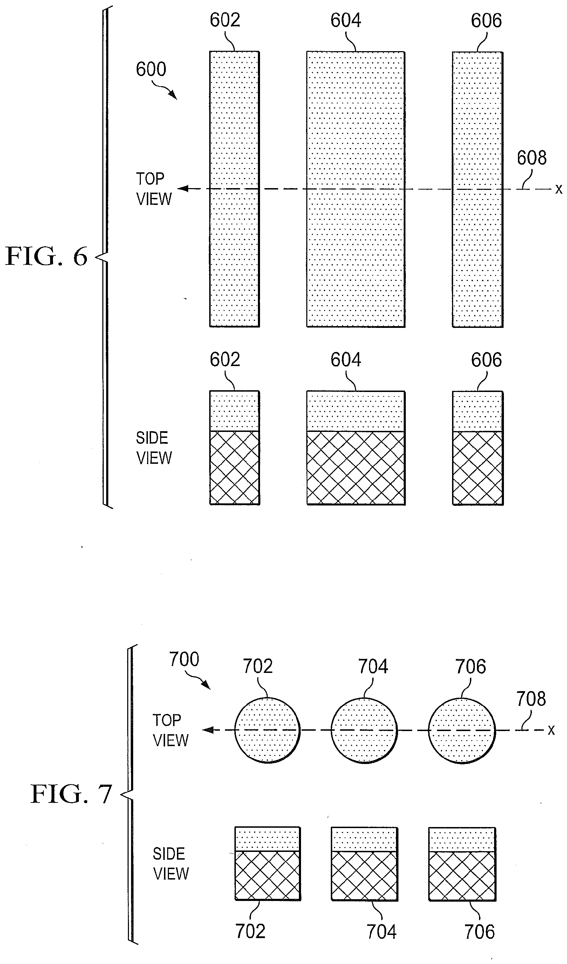

With reference now to **Figures 6-9****,** examples of transducer units are depicted in accordance with an advantageous embodiment. In **Figure 6****,** an illustration of a three-segment transducer unit is depicted in accordance with an advantageous embodiment. In this illustrative example, transducer unit **600** is shown in a top view and a side view. Transducer unit **600** is an example of one implementation for second transducer unit **318** in **Figure 3****.**

As depicted, transducer unit **600** comprises transducers **602, 604,** and **606.** These three transducers are examples of segments **326** in **Figure 3****.** As can be seen, transducer unit **600** is symmetric along axis **608.**

In **Figure 7****,** another illustration of a three-segment transducer unit is depicted in accordance with an advantageous embodiment. In this illustrative example, transducer unit **700** comprises transducer **702,** transducer **704,** and transducer **706.** Transducer unit **700** is symmetric about axis **708.**

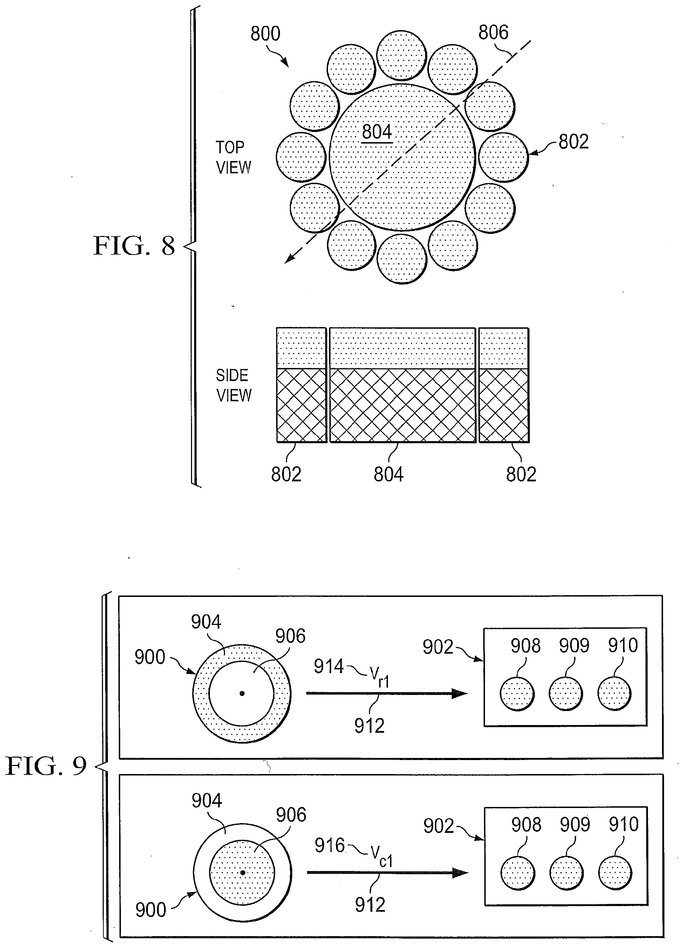

With reference now to **Figure 8****,** an illustration of a ring-based transducer unit is depicted in accordance with an advantageous embodiment. In this illustrative example, transducer unit **800** comprises plurality of transducers **802** and transducer **804.** Plurality of transducers **802** are arranged in the form of a ring around transducer **804** in this illustrative example. Transducer unit **800** is symmetric about axis **806** in these examples.

With reference now to **Figure 9****,** an illustration of signals detected by two different segments of a transducer unit is depicted in accordance with an advantageous embodiment. In this illustrative example, transducer unit **900** functions as a transmitter, while transducer unit **902** functions as a sensor. Transducer unit **900** has ring segment **904** and circular segment **906.** Transducer unit **902** has circular segment **908,** circular segment **909,** and circular segment **910.**

As depicted in this illustrative example, path **912** is formed between transducer unit **900** and transducer unit **902.** Activation of different segments for the transducer units allows six different Lamb wave signals to be obtained.

For example, when ring segment **904** of transducer unit **900** is activated, signal **914,** Vᵣ₁, is detected by circular segment **908** of transducer unit **902.** Further, when circular segment **906** is activated, signal **916,** V_{c1}, is detected by circular segment **908** of transducer unit **902.**

Further, two different Lamb wave signals (not shown), V_{c2} and V_{c3}, may be detected by circular segment **909** and circular segment **910** of transducer unit **902** when circular segment **906** of transducer unit **900** is activated. In a similar fashion, two different Lamb wave signals (not shown) , Vᵣ₂ and Vᵣ₃, may be detected by circular segment **909** and circular segment **910** of transducer unit **902** when ring segment **904** of transducer unit **900** is activated.

In this illustrative example, the modes for signal **914** and signal **916** may have substantially identical arrival times at circular segment **908,** respectively, but different amplitudes. Further, the amplitudes of the symmetric (S₀) modes and the asymmetric (A₀) modes change at different rates as the size of the segment in the transmitting transducer unit that transmits the signal varies.

In other words, the amplitudes of the symmetric modes and the asymmetric modes change depending on which segment is activated to transmit in transducer unit **900.** Additionally, the rate at which the amplitude of each mode in the modes for the signal changes, with respect to the size of the particular segment transmitting in transducer unit **900,** is not based on the distance between transducer unit **900** and transducer unit **902.**

Signal **914** and signal **916** may be used by, for example, signal analysis module **310** in **Figure 3****,** to identify a number of modes for use in identifying inconsistencies in an object. For example, signal **914** and signal **916** may be excited at ring segment **904** and circular segment **906** for transducer unit **900.** The amplitudes of the symmetric modes in signal **914** and signal **916** are normalized such that the amplitudes of the symmetric modes are substantially equal.

The symmetric modes may then be removed by subtracting signal **914,** Vᵣ₁, from signal **916,** V_{c1}. In other words, the symmetric modes are subtracted from each other such that only the asymmetric mode remains. The signal formed by the subtraction does not preserve the amplitude information. This signal does, however, retain arrival time information for the asymmetric mode. In this manner, time information may be identified using the asymmetric mode.

In particular, the asymmetric mode signal or waveform formed contains information for the time of travel between transducer unit **900** and transducer unit **902.** In this manner, time information may be identified using the asymmetric mode waveform.

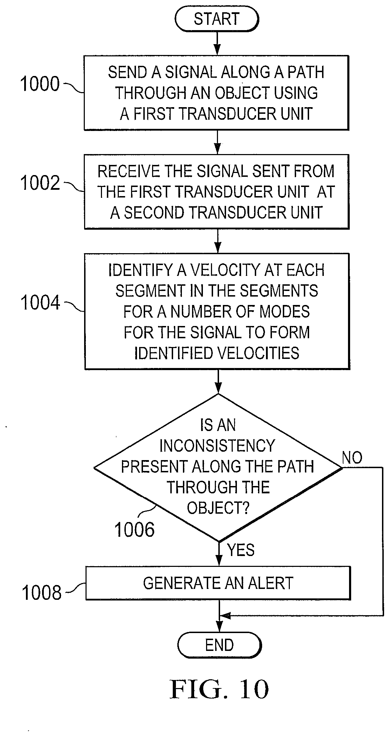

With reference now to **Figure 10****,** an illustration of a flowchart of a process for detecting an inconsistency in an object is depicted in accordance with an advantageous embodiment. The process illustrated in **Figure 10** may be implemented in health monitoring environment **300** in **Figure 3****.** In particular, this process may be implemented within signal analysis module **310** in **Figure 3****.**

The process begins by sending a signal along a path through an object using a first transducer unit (operation **1000**). This first transducer unit functions as a transmitter. The signal sent from the first transducer unit is received at a second transducer unit (operation **1002**). The second transducer unit functions as a sensor. The second transducer unit has segments.

The process then identifies a velocity at each segment in the segments for a number of modes for the signal to form identified velocities (operation **1004**). In this illustrative example, the number of modes includes one type of mode. In particular, the mode is an asymmetric mode.

A determination is made as to whether an inconsistency is present along the path through the object (operation **1006**) using the identified velocities for the number of modes for the signal. In operation **1006,** the determination is made by determining whether a difference between the identified velocities is greater than a threshold. An inconsistency is present along the path when the difference is greater than the threshold.

If an inconsistency is not present, the process terminates. Otherwise, if an inconsistency is present, the process generates an alert (operation **1008**), with the process terminating thereafter.

The flowcharts and block diagrams in the different depicted embodiments illustrate the architecture, functionality, and operation of some possible implementations of apparatuses and methods in different advantageous embodiments. In this regard, each block in the flowchart or block diagrams may represent a module, segment, function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

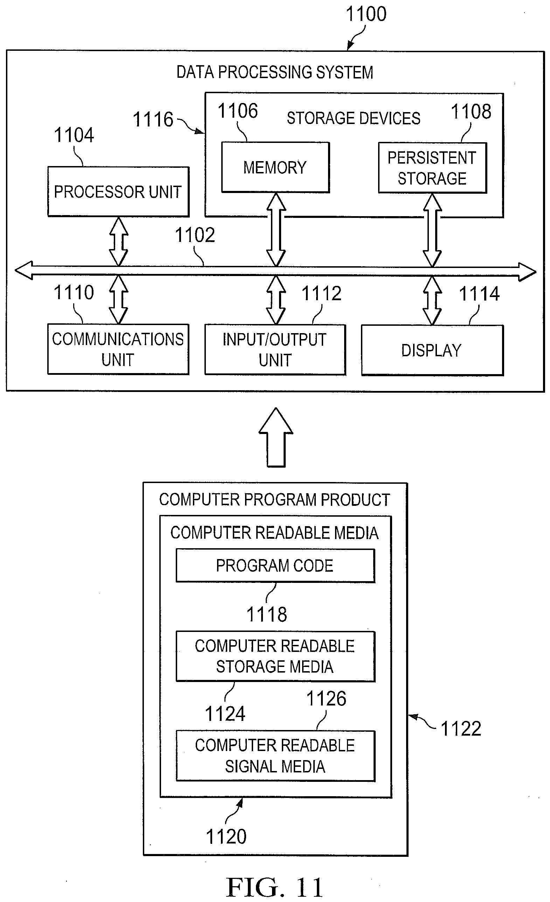

Turning now to **Figure 11****,** an illustration of a data processing system is depicted in accordance with an advantageous embodiment. In this illustrative example, data processing system **1100** includes communications fabric **1102,** which provides communications between processor unit **1104,** memory **1106,** persistent storage **1108,** communications unit **1110,** input/output (I/O) unit **1112,** and display **1114.**

Processor unit **1104** serves to execute instructions for software that may be loaded into memory **1106.** Processor unit **1104** may be a number of processors, a multi-processor core, or some other type of processor, depending on the particular implementation. A number, as used herein with reference to an item, means one or more items. Further, processor unit **1104** may be implemented using a number of heterogeneous processor systems in which a main processor is present with secondary processors on a single chip. As another illustrative example, processor unit **1104** may be a symmetric multi-processor system containing multiple processors of the same type.

Memory **1106** and persistent storage **1108** are examples of storage devices **1116.** A storage device is any piece of hardware that is capable of storing information, such as, for example, without limitation, data, program code in functional form, and/or other suitable information either on a temporary basis and/or a permanent basis. Storage devices **1116** may also be referred to as computer readable storage devices in these examples. Memory **1106,** in these examples, may be, for example, a random access memory or any other suitable volatile or non-volatile storage device. Persistent storage **1108** may take various forms, depending on the particular implementation.

For example, persistent storage **1108** may contain one or more components or devices. For example, persistent storage **1108** may be a hard drive, a flash memory, a rewritable optical disk, a rewritable magnetic tape, or some combination of the above. The media used by persistent storage **1108** may also be removable. For example, a removable hard drive may be used for persistent storage **1108.**

Communications unit **1110,** in these examples, provides for communications with other data processing systems or devices. In these examples, communications unit **1110** is a network interface card. Communications unit **1110** may provide communications through the use of either or both physical and wireless communications links.

Input/output unit **1112** allows for input and output of data with other devices that may be connected to data processing system **1100.** For example, input/output unit **1112** may provide a connection for user input through a keyboard, a mouse, and/or some other suitable input device. Further, input/output unit **1112** may send output to a printer. Display **1114** provides a mechanism to display information to a user.

Instructions for the operating system, applications, and/or programs may be located in storage devices **1116,** which are in communication with processor unit **1104** through communications fabric **1102.** In these illustrative examples, the instructions are in a functional form on persistent storage **1108.** These instructions may be loaded into memory **1106** for execution by processor unit **1104.** The processes of the different advantageous embodiments may be performed by processor unit **1104** using computer implemented instructions, which may be located in a memory, such as memory **1106.**

These instructions are referred to as program code, computer usable program code, or computer readable program code that may be read and executed by a processor in processor unit **1104.** The program code in the different embodiments may be embodied on different physical or computer readable storage media, such as memory **1106** or persistent storage **1108.**

Program code **1118** is located in a functional form on computer readable media **1120** that is selectively removable and may be loaded onto or transferred to data processing system **1100** for execution by processor unit **1104.** Program code **1118** and computer readable media **1120** form computer program product **1122** in these examples. In one example, computer readable media **1120** may be computer readable storage media **1124** or computer readable signal media **1126.** Computer readable storage media **1124** may include, for example, an optical or magnetic disk that is inserted or placed into a drive or other device that is part of persistent storage **1108** for transfer onto a storage device, such as a hard drive, that is part of persistent storage **1108.**

Computer readable storage media **1124** may also take the form of a persistent storage, such as a hard drive, a thumb drive, or a flash memory, that is connected to data processing system **1100.** In some instances, computer readable storage media **1124** may not be removable from data processing system **1100.** In these examples, computer readable storage media **1124** is a physical or tangible storage device used to store program code **1118** rather than a medium that propagates or transmits program code **1118.** Computer readable storage media **1124** is also referred to as a computer readable tangible storage device or a computer readable physical storage device. In other words, computer readable storage media **1124** is a media that can be touched by a person.

Alternatively, program code **1118** may be transferred to data processing system **1100** using computer readable signal media **1126.** Computer readable signal media **1126** may be, for example, a propagated data signal containing program code **1118.** For example, computer readable signal media **1126** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some advantageous embodiments, program code **1118** may be downloaded over a network to persistent storage **1108** from another device or data processing system through computer readable signal media **1126** for use within data processing system **1100.** For instance, program code stored in a computer readable storage medium in a server data processing system may be downloaded over a network from the server to data processing system **1100.** The data processing system providing program code **1118** may be a server computer, a client computer, or some other device capable of storing and transmitting program code **1118.**

The different components illustrated for data processing system **1100** are not meant to provide architectural limitations to the manner in which different embodiments may be implemented. The different advantageous embodiments may be implemented in a data processing system including components in addition to or in place of those illustrated for data processing system **1100.** Other components shown in **Figure 11** can be varied from the illustrative examples shown. The different advantageous embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1104** may take the form of a hardware unit that has circuits that are manufactured or configured for a particular use. This type of hardware may perform operations without needing program code to be loaded into a memory from a storage device to be configured to perform the operations.

For example, when processor unit **1104** takes the form of a hardware unit, processor unit **1104** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **1118** may be omitted because the processes for the different embodiments are implemented in a hardware unit.

In still another illustrative example, processor unit **1104** may be implemented using a combination of processors found in computers and hardware units. Processor unit **1104** may have a number of hardware units and a number of processors that are configured to run program code **1118.** With this depicted example, some of the processes may be implemented in the number of hardware units, while other processes may be implemented in the number of processors.

In another example, a bus system may be used to implement communications fabric **1102** and may be comprised of one or more buses, such as a system bus or an input/output bus. Of course, the bus system may be implemented using any suitable type of architecture that provides for a transfer of data between different components or devices attached to the bus system.

Additionally, a communications unit may include a number of one or more devices that are configured to transmit data, receive data, or transmit and receive data. A communications unit may be, for example, a modem or a network adapter, two network adapters, or some combination thereof. Further, a memory may be, for example, memory **1106,** or a cache, such as found in an interface and memory controller hub that may be present in communications fabric **1102.**

In one or more of the illustrative examples, inconsistencies are detected without any comparison with previously obtained baseline data. This type of identification of inconsistencies may be performed even in the presence of environmental variations, such as, for example, without limitation, temperature, pressure, and/or other environmental changes. In some examples, velocities are identified from signals sent through an object during a current state for a structure. These velocities are used to determine whether an inconsistency is present in the object. Baseline or other comparisons formed at prior times based on different environmental conditions are not used. As a result, the identification of an inconsistency is not affected by environmental conditions.

## Claims

1. A method for detecting an inconsistency in an object, the method comprising:
receiving a signal (324) sent from a first transducer unit (316) at a second transducer unit (318), wherein the signal is sent along a path (320) through an object (302) from the first transducer unit (316) to the second transducer unit (318) and wherein the second transducer unit (318) comprises a plurality of segments (326) substantially aligned along the path (320) of the signal (324), the first transducer unit (316) having a different distance (328) to each of the plurality of segments (326);
identifying a velocity at each segment in the plurality of segments (326) for a plurality of modes (340) for the signal (324) to form identified velocities (342); and
determining whether the inconsistency (306) is present along the path (320) through the object (302) using the identified velocities (342) for the plurality of modes (340) for the signal (324).

2. The method of claim 1, wherein the determining step comprises:
determining whether a difference (344) between the identified velocities (342) is greater than a threshold (350), wherein the inconsistency (306) is present along the path (320) through the object (302) when the difference (344) is greater than the threshold (350).

3. The method of claim 1, wherein the plurality of modes (340) comprises an asymmetric mode (341).

4. The method of claim 1, wherein the signal (324) is a Lamb wave (332).

5. The method of claim 1, wherein the plurality of segments (326) are transducers in the second transducer unit (318).

6. The method of claim 1, wherein the second transducer unit (318) comprises a transducer and the segments (326) are in the transducer.

7. The method of claim 1, wherein the path (320) passes through a material in the object (302) in which the material is selected from one of a composite material, a metal, titanium, aluminum, and steel.

8. An apparatus comprising:
a first transducer unit (316);
a second transducer unit (318) comprising a plurality of segments (326); and
a signal analysis module (310) configured to:
identify velocities (342) for a plurality of modes (340) for a signal (324) sent from the first transducer unit (316) and received at the plurality of segments (326) of the second transducer unit (318), wherein the signal (324) is sent along a path (320) through an object (302) from the first transducer unit (316) to the second transducer unit (318), the plurality of segments (326) substantially aligned along the path (320), the first transducer unit (316) having a different distance (328) to each of the plurality of segments (326); and
determine whether an inconsistency (306) is present along the path (320) through the object (302) using identified velocities (342) for the plurality of modes (340) for the signal (324).

9. The apparatus of claim 8 further comprising:
a transducer system (308) associated with the object (302), wherein the first transducer unit (316) and the second transducer unit (318) are part of the transducer system (308).

10. The apparatus of claim 8 wherein in being configured to determine whether the inconsistency (306) is present along the path (320) through the object (302) using the identified velocities (432) for the plurality of modes (340) for the signal (324), the signal analysis module (310) is configured to determine whether a difference (344) between the identified velocities (342) is greater than a threshold (350), wherein the inconsistency (306) is present along the path (320) through the object (302) when the difference (344) is greater than the threshold (350).

11. The apparatus of claim 8 wherein the signal (324) is a Lamb wave (332).

12. The apparatus of claim 8 wherein the plurality of modes (340) comprises an asymmetric mode (341).

13. The apparatus of claim 8 wherein the segments (326) are transducers in the second transducer unit (318) and are aligned along the path (320).

14. The apparatus of claim 8 wherein the second transducer unit (318) comprises a transducer and the segments (326) are in the transducer.

## Patentansprüche

1. Verfahren zum Feststellen einer Inkonsistenz in einem Gegenstand, wobei das Verfahren aufweist:
Empfangen eines Signals (324), das von einer ersten Wandlereinheit (316) gesendet wird, an einer zweiten Wandlereinheit (318), wobei das Signal entlang eines Pfads (320) durch einen Gegenstand (302) von der ersten Wandlereinheit (316) an die zweite Wandlereinheit (318) gesendet wird, und wobei die zweite Wandlereinheit (318) eine Vielzahl von Segmenten (326) aufweist, die im Wesentlichen entlang des Pfads (320) des Signals (324) ausgerichtet sind, wobei die erste Wandlereinheit (316) einen unterschiedlichen Abstand (328) zu jedem der Vielzahl von Segmenten (326) hat;
Identifizieren einer Geschwindigkeit an jedem Segment in der Vielzahl von Segmenten (326) für eine Vielzahl von Modi (340) für das Signal (324), um identifizierte Geschwindigkeiten (342) zu bilden; und
Ermitteln, ob die Inkonsistenz (306) entlang des Pfads (320) durch den Gegenstand (302) vorhanden ist, unter Verwendung der identifizierten Geschwindigkeiten (342) für die Vielzahl von Modi (340) für das Signal (324).

2. Verfahren nach Anspruch 1, wobei der Schritt des Ermittelns aufweist:
Ermitteln, ob eine Differenz (344) zwischen den identifizierten Geschwindigkeiten (342) größer als ein Schwellenwert (350) ist, wobei die Inkonsistenz (306) entlang des Pfads (320) durch den Gegenstand (302) vorhanden ist, wenn die Differenz (344) größer als der Schwellenwert (350) ist.

3. Verfahren nach Anspruch 1, wobei die Vielzahl von Modi (340) einen asymmetrischen Modus (341) aufweisen.

4. Verfahren nach Anspruch 1, wobei das Signal (324) eine Lamb-Welle (332) ist.

5. Verfahren nach Anspruch 1, wobei die Vielzahl von Segmenten (326) Wandler in der zweiten Wandlereinheit (318) sind.

6. Verfahren nach Anspruch 1, wobei die zweite Wandlereinheit (318) einen Wandler aufweist und die Segmente (326) in dem Wandler sind.

7. Verfahren nach Anspruch 1, wobei der Pfad (320) durch ein Material in dem Gegenstand (302) hindurchgeht, wobei das Material ausgewählt wird aus einem von einem Verbundmaterial, einem Metall, Titan, Aluminium und Stahl.

8. Vorrichtung, die aufweist:
eine erste Wandlereinheit (316);
eine zweite Wandlereinheit (318), die eine Vielzahl von Segmenten (326) aufweist; und
ein Signalanalysemodul (310), das konfiguriert ist zum:
Identifizieren von Geschwindigkeiten (342) für eine Vielzahl von Modi (340) für ein Signal (324), das von einer ersten Wandlereinheit (316) gesendet und an der Vielzahl von Segmenten (326) der zweiten Wandlereinheit (318) empfangen wird, wobei das Signal (324) entlang eines Pfads (320) durch einen Gegenstand (302) von der ersten Wandlereinheit (316) an die zweite Wandlereinheit (318) gesendet wird, wobei die Vielzahl von Segmenten (326) im Wesentlichen entlang des Pfads (320) ausgerichtet sind, wobei die erste Wandlereinheit (316) einen unterschiedlichen Abstand (328) zu jedem der Vielzahl von Segmenten (326) hat; und
Ermitteln, ob eine Inkonsistenz (306) entlang des Pfads (320) durch den Gegenstand (302) vorhanden ist, unter Verwendung der identifizierten Geschwindigkeiten (342) für die Vielzahl von Modi (340) für das Signal (324).

9. Vorrichtung nach Anspruch 8, die des Weiteren aufweist:
ein Wandlersystem (308), das zu dem Gegenstand (302) gehört, wobei die erste Wandlereinheit (316) und die zweite Wandlereinheit (318) Teil des Wandlersystems (308) sind.

10. Vorrichtung nach Anspruch 8, wobei das Signalanalysemodul (310), indem es dazu konfiguriert ist zu ermitteln, ob die Inkonsistenz (306) entlang des Pfads (320) durch den Gegenstand (302) vorhanden ist, unter Verwendung der identifizierten Geschwindigkeiten (432) für die Vielzahl von Modi (340) für das Signal (324), dazu konfiguriert ist zu ermitteln, ob eine Differenz (344) zwischen den identifizierten Geschwindigkeiten (342) größer als ein Schwellenwert (350) ist, wobei die Inkonsistenz (306) entlang des Pfads (320) durch den Gegenstand (302) vorhanden ist, wenn die Differenz (344) größer als der Schwellenwert (350) ist.

11. Vorrichtung nach Anspruch 8, wobei das Signal (324) eine Lamb-Welle (332) ist.

12. Vorrichtung nach Anspruch 8, wobei die Vielzahl von Modi (340) einen asymmetrischen Modus (341) aufweisen.

13. Vorrichtung nach Anspruch 8, wobei die Segmente (326) Wandler in der zweiten Wandlereinheit (318) sind und entlang des Pfads (320) ausgerichtet sind.

14. Vorrichtung nach Anspruch 8, wobei die zweite Wandlereinheit (318) einen Wandler aufweist und die Segmente (326) in dem Wandler sind.

## Revendications

1. Procédé destiné à détecter une incohérence dans un objet, le procédé comprenant :
la réception d'un signal (324) envoyé depuis une première unité de transducteur (316) au niveau d'une seconde unité de transducteur (318), dans lequel le signal est envoyé le long d'un chemin (320) à travers un objet (302) depuis la première unité de transducteur (316) vers la seconde unité de transducteur (318) et dans lequel la seconde unité de transducteur (318) comprend une pluralité de segments (326) sensiblement alignés le long du chemin (320) du signal (324), la première unité de transducteur (316) présentant une distance différente (328) par rapport à chacun de la pluralité de segments (326) ;
l'identification d'une vitesse au niveau de chaque segment dans la pluralité de segments (326) pour une pluralité de modes (340) pour le signal (324) afin de former des vitesses (342) identifiées ; et
la détermination si l'incohérence (306) est présente le long du chemin (320) à travers l'objet (302) en utilisant les vitesses identifiées (342) pour la pluralité de modes (340) pour le signal (324) .

2. Procédé selon la revendication 1, dans lequel l'étape de détermination comprend :
la détermination si une différence (344) entre les vitesses (342) identifiées est supérieure à un seuil (350), dans lequel l'incohérence (306) est présente le long du chemin (320) à travers l'objet (302) lorsque la différence (344) est supérieure au seuil (350).

3. Procédé selon la revendication 1, dans lequel la pluralité de modes (340) comprend un mode asymétrique (341).

4. Procédé selon la revendication 1, dans lequel le signal (324) est une onde de Lamb (332).

5. Procédé selon la revendication 1, dans lequel la pluralité de segments (326) sont des transducteurs dans la seconde unité de transducteur (318).

6. Procédé selon la revendication 1, dans lequel la seconde unité de transducteur (318) comprend un transducteur et les segments (326) sont dans le transducteur.

7. Procédé selon la revendication 1, dans lequel le chemin (320) passe à travers un matériau dans l'objet (302) dans lequel le matériau est choisi parmi un matériau composite, un métal, un titane, un aluminium et un acier.

8. Dispositif comprenant :
une première unité de transducteur (316) ;
une seconde unité de transducteur (318) comprenant une pluralité de segments (326) ; et
un module d'analyse de signal (310) configuré pour :
identifier des vitesses (342) pour une pluralité de modes (340) pour un signal (324) envoyé depuis la première unité de transducteur (316) et reçu au niveau de la pluralité de segments (326) de la seconde unité de transducteur (318), dans lequel le signal (324) est envoyé le long d'un chemin (320) à travers un objet (302) depuis la première unité de transducteur (316) vers la seconde unité de transducteur (318), la pluralité de segments (326) étant sensiblement alignés le long du the chemin (320), la première unité de transducteur (316) présentant une distance différente (328) par rapport à chacun de la pluralité de segments (326) ; et
déterminer si une incohérence (306) est présente le long du chemin (320) à travers l'objet (302) en utilisant les vitesses (342) identifiées pour la pluralité de modes (340) pour le signal (324) .

9. Dispositif selon la revendication 8, comprenant en outre :
un système de transducteur (308) associé à l'objet (302),
dans lequel la première unité de transducteur (316) et la seconde unité de transducteur (318) font partie du système de transducteur (308).

10. Dispositif selon la revendication 8, dans lequel il est configuré pour déterminer si l'incohérence (306) est présente le long du chemin (320) à travers l'objet (302) en utilisant les vitesses (342) identifiées pour la pluralité de modes (340) pour le signal (324), le module d'analyse de signal (310) est configuré pour déterminer si une différence (344) entre les vitesses identifiées (342) est supérieure à un seuil (350), dans lequel l'incohérence (306) est présente le long du chemin (320) à travers l'objet (302) lorsque la différence (344) est supérieure au seuil (350).

11. Dispositif selon la revendication 8, dans lequel le signal (324) est une onde de Lamb (332).

12. Dispositif selon la revendication 8, dans lequel la pluralité de modes (340) comprend un mode asymétrique (341).

13. Dispositif selon la revendication 8, dans lequel les segments (326) sont des transducteurs dans la seconde unité de transducteur (318) et sont alignés le long du chemin (320).

14. Dispositif selon la revendication 8, dans lequel la seconde unité de transducteur (318) comprend un transducteur et les segments (326) sont dans le transducteur.
